# EUROPEAN PATENT SPECIFICATION

(11) **EP 2 514 961 B1**
(45) Date of publication and mention of the grant of the patent: **13.09.2017**
(21) Application number: 11162976.2
(22) Date of filing: 19.04.2011
(51) Int. Cl.: F03D 1/06

(54) **Spoiler for a wind turbine rotor blade**
Spoiler für ein Windturbinenblatt
Déflecteur pour pale de rotor d'éolienne

(43) Date of publication of application: 24.10.2012
(73) Proprietor: Siemens Aktiengesellschaft, 80333 München (DE)
(72) Inventor: Enevoldsen, Peder Bay, 7100, Vejle (DK); Kristensen, Jens Jørgen Østergaard, 9240, Nibe (DK); Stege, Jason, 7330, Brande (DK); Thrue, Carsten, 8740, Braedstrup (DK)

(56) References cited:
- EP-A1- 1 314 885
- EP-A1- 2 031 242
- WO-A1-2011/042527
- WO-A1-2011/042528
- DE-A1- 19 964 114
- DE-A1-102006 017 897
- DE-A1-102006 034 831
- GB-A- 2 462 308

## Description

The invention describes a spoiler for a rotor blade of a wind turbine

A rotor blade of a wind turbine generally does not have a uniformly flat surface, but is formed in the manner of an airfoil with a gradually changing curvature. Furthermore, a transition must be made between an essentially circular root section (for connecting to a circular opening on the hub of the wind turbine) and the comparatively wide and narrow airfoil section. Because of the relatively abrupt shape change in this 'shoulder' region, a higher level of turbulence can arise. The aerodynamic properties of the rotor blade can be improved by modifying the profile of the rotor blade in the critical shoulder region. Such aerodynamic alterations could involve some kind of 'extension' to one side of the rotor blade, for example a spoiler extending from a suction side of the blade, i.e. the leeward-facing side of the blade. This can act to reduce the amount of eddies generated as the rotor blade displaces the air through which it moves, and/or to reduce the amount of noise generated by the rotor blade. DE 199 64 114 A1, GB 2 462 308 A, and EP 1 314 885 A1 describe various versions of such spoiler concepts. However, such modifications to the rotor blade during the manufacturing process are not particularly straightforward, since a rotor blade is generally made from fibreglass composite in a vacuum extraction process, which does not lend itself to forming a thin planar extension of a rotor blade surface. Also, the addition of such relatively thin and therefore breakable parts makes the transport of the rotor blades, and their mounting onto the hub, more difficult and therefore also more expensive, for example in the rotor blade and spoiler designs of DE 10 20006 017897 A1, EP 2 031 242 A1, DE 10 2006 034831 A1,
WO 2011/042528 A1 and WO 2011/042527 A1. The established alternative is to attach the spoilers to the rotor blades after these have been mounted to the hub. Such prior art spoilers often comprise various differently shaped parts that are shaped to suit the various different curved surfaces of the rotor blade in the shoulder region. However, the design of several differently shaped parts is costly, since the parts must exactly fit the rotor blade surface to ensure smooth air travel over the combined rotor blade/spoiler surface. Furthermore, maintenance procedures are generally made more complicated, since specific replacement parts must be provided for the different regions of the rotor blade.

It is therefore an object of the invention to provide a more simple and economical spoiler for a wind turbine rotor blade.

The object of the invention is achieved by the spoiler according to claim 1 for a rotor blade of a wind turbine, by the rotor blade of claim 8, and by the wind turbine of claim 12.

According to the invention, a spoiler for a rotor blade of a wind turbine comprises a spoiler body and a first mounting band arranged along a first longitudinal edge of the spoiler body and a second mounting band arranged along a second longitudinal edge of the spoiler body for mounting the spoiler onto a surface of the rotor blade, wherein a mounting band comprises an angled extension of the spoiler body, which mounting band is realised to adapt to a curvature of the rotor blade surface, in particular along an outer longitudinal edge of the rotor blade, wherein the spoiler body and the mounting band are formed as a single entity, and wherein a mounting band is arranged for mounting onto a trailing edge of the rotor blade.

An advantage of the spoiler according to the invention is its very simple but effective design. By realizing the spoiler as a single, essentially flexible entity with mounting bands or attachment bands that can adapt to variations in the curvature of the rotor blade surface, there is no need to design different spoiler parts for different curved surfaces, as is the case for the known spoiler solutions in the prior art. Furthermore, since the spoiler is effectively one entity, comprising only a single part, it is very easy for a service technician to attach it to a rotor blade. Particularly for the case when a spoiler according to the invention is to be mounted onto a rotor blade already connected to the hub of a wind turbine, the service technician does not have to carry several different small parts such as fittings or fasteners, and does not have to manipulate such items while being suspended from a rope.

According to the invention, a rotor blade for a wind turbine comprises a spoiler according to the invention, mounted onto a surface of the rotor blade, preferably onto the pressure side of the rotor blade.

According to the invention, a wind turbine - comprising a number of rotor blades attached to a hub - comprises at least one rotor blade with a spoiler according to the invention mounted onto a surface of the rotor blade, preferably onto the pressure side.

An advantage of the rotor blade and the wind turbine according to the invention is that the spoiler can very quickly be mounted onto the rotor blade, even along a part of the rotor blade with pronounced differences in curvature, for example in the shoulder or transition region between the root and the airfoil parts of the blade, since the flexible realisation of the spoiler body and its mounting band(s) allows the spoiler to adapt to any changes in the curvature of the rotor blade along the length of the spoiler. Therefore, instead of having to mount several different types of spoiler, each of which is realised to suit a certain rotor blade surface shape, a single spoiler, or at least a single spoiler type, can be used. This saves design costs as well as mounting costs. In particular, the rotor blades of an already operational wind turbine can easily and cheaply be retro-fitted with spoilers according to the invention, since only a relatively brief down-time is required for a service technician to mount the spoiler(s).
Particularly advantageous embodiments and features of the invention are given by the dependent claims, as revealed in the following description. Features described in the context of one claim category can apply equally to another claim category. Features of the different claim categories may be combined as appropriate to arrive at further embodiments.

As indicated above, the spoiler comprises a first mounting band arranged along a first longitudinal edge of the spoiler body and a second mounting band arranged along a second longitudinal edge of the spoiler body. Since the spoiler is realized as a single flexible entity, an arrangement of two mounting bands can favourably adapt to essentially any variation in curvature, even over the shoulder region of the rotor blade. This presents an improvement over a single mounting band that is essentially as wide as the spoiler itself, since a single mounting band may not be able to sufficiently withstand the forces acting on it over time, and may not be able to adapt to marked or pronounced variations in the curvature of the rotor blade surface, particularly in the shoulder region of the blade.

According to the invention, a mounting band comprises a pre-formed angled extension of the spoiler body, which angled extension is such that the angle between the mounting band and the spoiler body corresponds essentially to the desired angle or orientation of the spoiler relative to the rotor blade. For example, if the spoiler is to subtend an angle of about 160° between one of its longitudinal edges and the pressure side of the blade, the mounting band along that edge can, during a manufacturing process, be pre-formed or pre-bent relative to the spoiler body by 160° along a pre-bent angle line. Of course, owing to the flexible nature of the spoiler, the mounting band can still adapt to the rotor blade surface as required, without any stress damage along the pre-bent angle line. For example, a pre-bent mounting band at an angle of 160° could easily adapt to surface curvature so that the mounting band subtends an angle of 130°, 170°, 180°, etc. to the spoiler body. The pre-formed angled extension provides an advantage over physically bending, for example manually, an outer band or strip of the spoiler to obtain a desired angle for the spoiler body relative to the rotor blade surface, since bending a material such as a plastic can result in cracks or other stress damage.

According to the invention, a mounting band is arranged for mounting onto a trailing edge of the rotor blade, whereby a mounting band is preferably pre-bent to extend outwardly away from the spoiler. For example, a mounting band can be arranged for mounting onto a pressure side of the rotor blade, along an edge of the pressure side along the trailing edge of the rotor blade, in other words along an intersection between the pressure side of the blade and its trailing edge. Alternatively, a mounting band can be arranged for mounting onto a blunt or flat trailing edge of the rotor blade. The invention therefore provides an improvement over an arrangement in which the mounting bands are oriented to lie under the spoiler body, which arrangement might make it more difficult to perform the mounting step when the spoiler is to be attached to the rotor blade.

The spoiler can be mounted onto the rotor blade in any suitable manner, for example using the traditional types of fasteners such as bolts or screws. However, bolt or screw heads can protrude above the mounting band, and might have a detrimental effect on the aerodynamic properties of the rotor blade. Therefore, in a particularly preferred embodiment of the invention, a rotor blade comprises an adhesive layer between a mounting band and the rotor blade surface for an adhesive connection to the rotor blade surface. An adhesive can provide robust adherence for a favourably long time. However, heat and cold could compromise the lifetime of the adhesive. Therefore, to protect the adhesive layer, an additional grout seal could be applied along the outer edges of the mounting bands. Of course, the use of an adhesive as a primary attachment means does not exclude the use of a number of fasteners such as screws, bolts, or rivets for an additional threaded and/or riveted connection to the rotor blade surface in regions that do not affect the airflow over the spoiler and rotor blade surface.

The spoiler can effectively comprise a single element, which can be imagined as a single plane bent into a spoiler shape. Such a spoiler is preferably manufactured using any of the techniques of extrusion, casting, injection moulding. Of course, the spoiler can have a more complex form. For example, in a further preferred embodiment of the invention, the spoiler body comprises an aerodynamic element, and a reinforcing element arranged to project outward from the aerodynamic element. The aerodynamic element can simply be a gently curved foil arranged to smoothly extend beyond the rotor blade surface, while a reinforcing element can comprise rigid 'struts' that are arranged in an upright manner, for example at right angles, between the aerodynamic element and the rotor blade surface. In such an embodiment, a first mounting band is preferably formed to extend from the aerodynamic element, and a second mounting band is preferably formed to extend from the reinforcing element. The second mounting band, since it is 'hidden' from the airflow by the aerodynamic element, can be attached to the rotor blade using fasteners such as a bolts or screws, while the first mounting band is preferably attached to the rotor blade surface by means of adhesive so that an favourably smooth transition between rotor blade surface and spoiler surface can be obtained.

A spoiler could equally well comprise a closed spoiler body, i.e. the spoiler could be hollow, or might comprise a solid body. In such a realization, mounting bands might be formed to extend outward from the spoiler body. Alternatively, the spoiler can comprise a first mounting band and a second mounting band arranged on a common spoiler body surface, which spoiler body surface is disposed toward a rotor blade surface, for example the pressure side of the rotor blade. In such a realization, a cavity may be formed between the rotor blade surface, the sides of the mounting bands, and the underside of the spoiler (i.e. the surface of the spoiler disposed toward the rotor blade surface). However, water, snow or ice crystals may collect in such a cavity, and may cause damage (for example if collected water should freeze and expand) or may detract from the performance of the rotor blade (as a result of the added weight). Therefore, in a further embodiment of the invention, the closed spoiler preferably comprises a number of drainage holes for allowing a fluid to drain from a cavity formed by the spoiler body, the mounting bands, and the rotor blade surface. A drainage hole can simply be an opening at one end of the spoiler, for example at an outer end, so that any collected water can be expelled by the centrifugal force acting on it as the blade rotates. Alternatively, a drainage hole can comprise a gap intentionally formed along a mounting band.

For optimal aerodynamic properties, a rotor blade surface should be as smooth as possible. Therefore, mounting bands that are attached to the surface of the rotor blade are preferably thin, and an adhesive layer is also preferably thin. However, such a thin mounting band might not be particularly robust. Therefore, in a preferred embodiment of the invention, a rotor blade comprises a recess at least along a length of the rotor blade surface upon which a spoiler is to be mounted, which recess is realised to at least partially accommodate a mounting band. For example, a recess can comprise a flat groove, perhaps a few millimetres deep, so that an adhesive layer can be spread over the 'floor' of the recess and so that a mounting band can be pressed into the recess. Preferably, a mounting band is contained in the recess such that an outer surface of the mounting band is flush with the rotor blade surface. To this end, the depth of the recess is chosen to accommodate a certain adhesive layer thickness and a certain mounting band thickness.

Other objects and features of the present invention will become apparent from the following detailed descriptions considered in conjunction with the accompanying drawings. It is to be understood, however, that the drawings are designed solely for the purposes of illustration and not as a definition of the limits of the invention.
Fig. 1 shows a rotor blade for a wind turbine;
Fig. 2 shows a cross-section through a spoiler according to a first embodiment of the invention;
Fig. 3 shows a cross-section through a spoiler according to a second embodiment of the invention;
Fig. 4 shows a cross-section through a spoiler according to a third embodiment of the invention;
Fig. 5 shows a cross-section through a spoiler according to a fourth embodiment of the invention;
Fig. 6 shows a cross-section through a spoiler according to a fifth embodiment of the invention;
Fig. 7 shows a schematic representation of a spoiler according to the invention;
Fig. 8 shows a wind turbine according to the invention.

In the drawings, like reference numbers refer to like objects throughout. Objects in the diagrams are not necessarily drawn to scale.

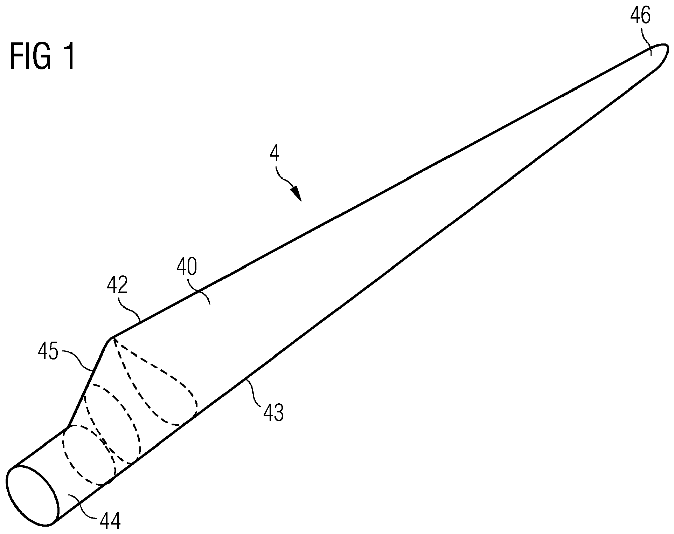

Fig. 1 shows a rotor blade 4 for a wind turbine. The rotor blade 4 comprises a root end 44, which is usually circular in cross-section and is attached to a corresponding bearing in a hub of the wind turbine. In a transition from the root 44 to a shoulder region 45, the blade becomes wider and flatter, and thereafter becomes progressively narrower and thinner towards a tip 46. The longer part of the blade 4 is shaped to have a cross-section similar to that of an airfoil, so that the wind can displace the rotor blade 4, which in turn causes the hub (and therefore a rotor of an electrical generator) to rotate. To this end, the blade 4 has a 'suction side' 40 with an essentially convex surface that faces into the leeward side as the blade 4 turns, and a 'pressure side' with an essentially concave surface that faces into the windward side as the blade 4 is caused to turn. Eddies or disturbances arising as the air is displaced can result in additional unwanted drag, as well as unfavourable levels of noise. As the blade 4 turns, one long edge 43 (the leading edge 43) leads, while the other long edge 42 'trails behind', and this is therefore referred to as the trailing edge.

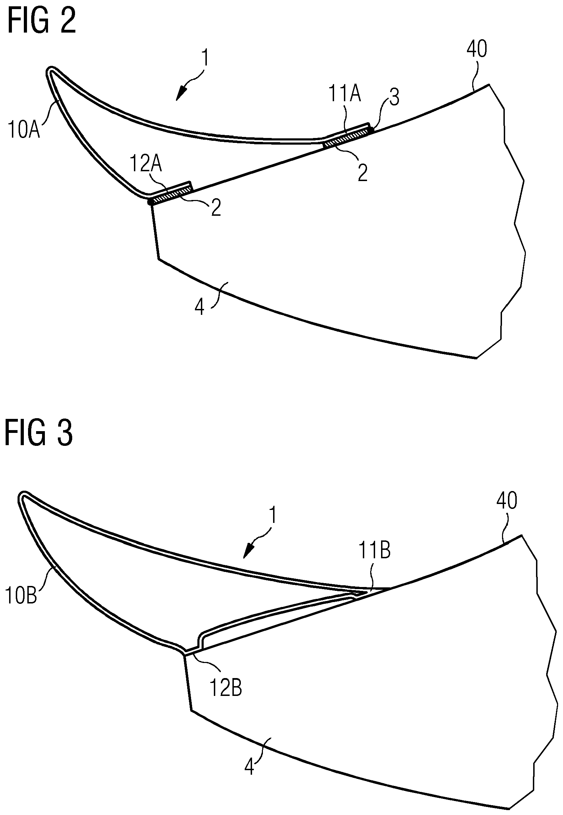

Fig. 2 shows a cross-section through a spoiler 1 according to a first embodiment of the invention. Here, the spoiler 1 comprises an open spoiler body 10A and two mounting bands 11A, 12A formed as a single entity, for example by extrusion. The spoiler 1 is attached to the rotor blade 4 by means of adhesive layers 2 between the mounting bands 11A, 12A and the outer surface of the rotor blade 4. To protect the adhesive 2 from weather influence, a strip of grout 3 can be applied as a protective seal for the adhesive 2. In this example, the spoiler 1 is mounted onto the pressure side 40 of the rotor blade 4. Because the spoiler 1 has a relatively high degree of flexibility, it can adapt to the typical variations in curvature of the rotor blade surface 40.

Fig. 3 shows a cross-section through a spoiler 1 according to a second embodiment of the invention. Here, the spoiler 1 comprises a closed spoiler body 10B and two mounting bands 11B, 12B formed to protrude from the spoiler body 10B. Again, the spoiler 1 is attached to the rotor blade 4 by means of adhesive layers between the mounting bands 11B, 12B and the pressure side 40 of the rotor blade 4. A first mounting band 11B can be formed so that the upper surface of the spoiler body 10B meets the rotor blade surface in a smooth transition, i.e. without any pronounced 'corner', to allow air to pass smoothly over the combined rotor/spoiler surface. This type of spoiler can be open at its outer ends (not shown in the diagram) to prevent rainwater from collecting in the cavity between the spoiler body 10B and the rotor blade surface 40.

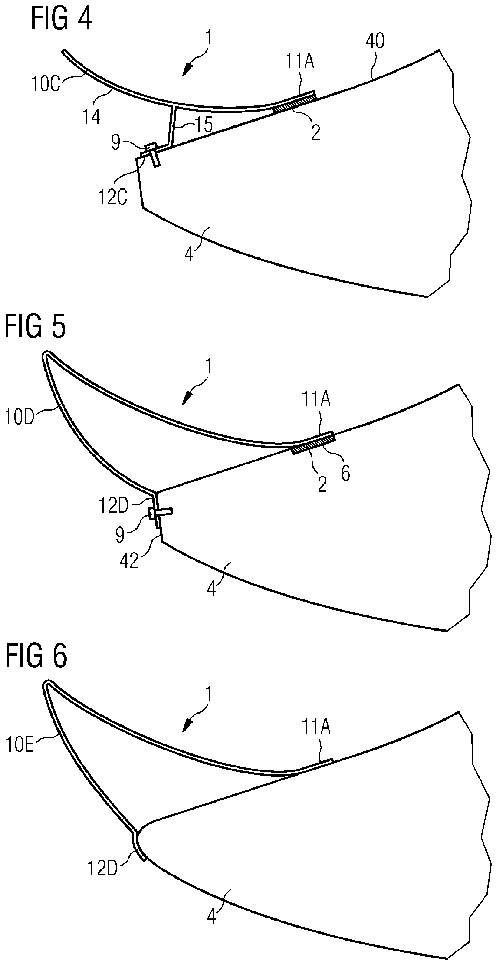

Fig. 4 shows a cross-section through a spoiler 1 according to a third embodiment of the invention. Here, the spoiler 1 comprises an open spoiler body 10C made of two elements, an aerodynamic element 14 and a reinforcing element 15. The aerodynamic element 14 comprises a simple curved surface and continues into a first mounting band 11A. The reinforcing element 15 comprises a simple flat strip and continues at an angle into a second mounting band 12C. The first mounting band 11A is glued to the rotor blade surface using a layer of adhesive 2, while the second mounting band 11C is bolted or screwed onto the rotor blade surface 40 using appropriate fasteners 9.

Fig. 5 shows a cross-section through a spoiler 1 according to a fourth embodiment of the invention. Here, the spoiler 1 comprises an open spoiler body 10D similar to that shown in Fig. 2 above, with a first mounting band 11A attached to the pressure side 40 of the rotor blade 4. The first mounting band 11A lies in a recess 6 which is deep enough to accommodate the mounting band 11A as well as an adhesive layer 2. In this embodiment, a second mounting band 12D is attached to a blunt trailing edge 42 of the rotor blade 4, using bolts 9 or screws 9. This realisation of the spoiler 1 according to the invention is particularly easy to mount onto the rotor blade 4.

Fig. 6 shows a cross-section through a spoiler 1 according to a fifth embodiment of the invention, with an open spoiler body 10E similar to that shown in Fig. 5 above. Here, the trailing edge of the rotor blade 4 is not blunt and is therefore too narrow for mounting purposes, so that the second mounting band 12D is attached instead to the suction side of the rotor blade 4. The flexible nature of the mounting bands 11A, 12D and the spoiler body 10E allow the spoiler 1 to adapt to the various curved surfaces of the rotor blade 4.

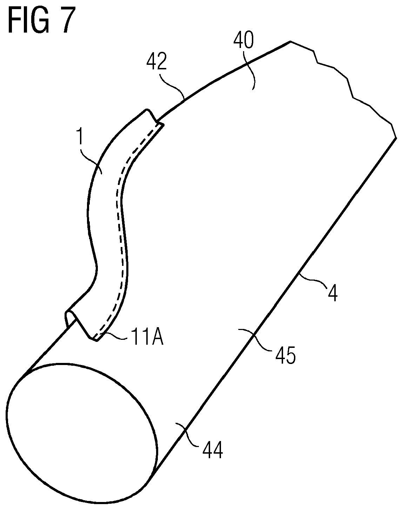

Fig. 7 shows a schematic representation of a spoiler 1 according to the invention, for example the spoiler of Fig. 5 or Fig. 6, with an open spoiler body and a first mounting band 11A on the pressure side 40 of the blade 4, and a second mounting band (not shown) on the trailing edge or suction side of the blade 4. As the diagram shows, the spoiler 1 can follow the shape of a curved line from a region close to the root 44 of the blade 4, along a transition or shoulder region 45 in the direction of the airfoil part of the blade 4. The curved shape is made possible by the flexible realization of the spoiler body and the mounting bands.

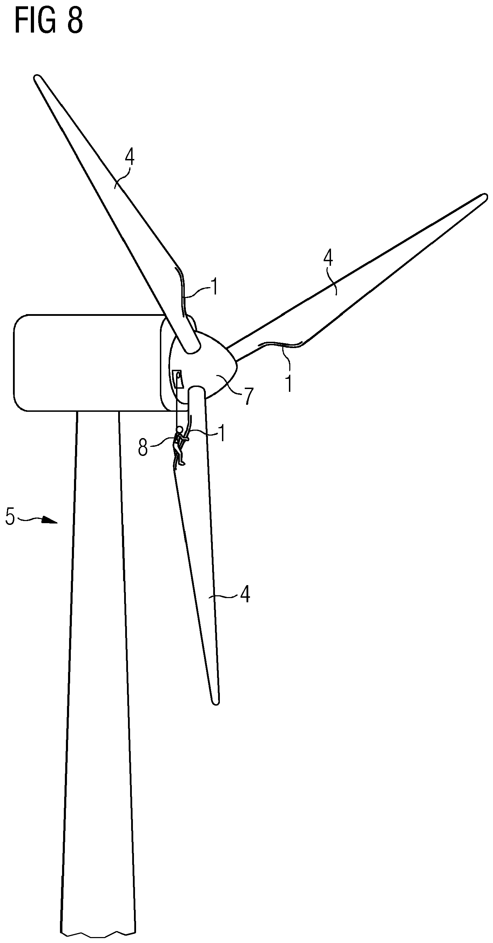

Fig. 8 shows a wind turbine 5 according to the invention. Here, a spoiler 1 is being mounted onto a blade 4, or an already existing spoiler 1 is being repaired or altered in a maintenance step. The generator has been deactivated, so that the hub 7 does not turn, and so that the blade 4 to be serviced is pointing downward. A service technician 8 has descended to the shoulder region of that blade 4, and can add, replace or remove a spoiler. The maintenance procedure can be very brief, since the spoiler can easily be attached to the rotor blade 4 on account of the flexible nature of the spoiler body and the mounting bands, so that the down-time of the wind-turbine 5 can be favourably minimized.

Although the present invention has been disclosed in the form of preferred embodiments and variations thereon, it will be understood that numerous additional modifications and variations could be made thereto without departing from the scope of the invention.

For the sake of clarity, it is to be understood that the use of "a" or "an" throughout this application does not exclude a plurality, and "comprising" does not exclude other steps or elements.

## Claims

1. A spoiler (1) for a rotor blade (4) of a wind turbine (5), which spoiler (1) comprises
- a spoiler body (10A, 10B, 10C, 10D, 10E) and
- a first mounting band (11A, 11B) arranged along a first longitudinal edge (13A) of the spoiler body (10A, 10B, 10C, 10D, 10E) and a second mounting band (12A, 12B, 12C, 12D) arranged along a second longitudinal edge (13B) of the spoiler body (10A, 10B, 10C, 10D, 10E) for mounting the spoiler (1) onto a surface (40, 42) of the rotor blade (4), wherein a mounting band (11A, 11B, 12A, 12B, 12C, 12D) comprises an angled extension of the spoiler body (10A, 10C, 10D, 10E), which mounting band (11A, 11B, 12A, 12B, 12C, 12D) is realised to adapt to a curvature of the rotor blade surface (40, 42);wherein the spoiler body (1) and the mounting band (11A, 11B, 12A, 12B, 12C, 12D) are formed as a single entity;
and wherein a mounting band (11A, 11B, 12A, 12B, 12C, 12D) is arranged for mounting onto a trailing edge (42) of the rotor blade (4).

2. A spoiler according to claim 1, wherein a mounting band (11A, 11B, 12A, 12B, 12C, 12D) is arranged for mounting onto a pressure side (40) of the rotor blade (4).

3. A spoiler according to any of the preceding claims, wherein the spoiler body (10C) comprises an aerodynamic element and a reinforcing element arranged to project outward from the aerodynamic element.

4. A spoiler according to claim 3, comprising a first mounting band (11A) connected to the aerodynamic element, and a second mounting band (12C) connected to the reinforcing element.

5. A spoiler according to claim any of the preceding claims, wherein the spoiler (1) comprises a closed spoiler body (10B).

6. A spoiler according to claim 5, comprising a first mounting band (11B) and a second mounting band (12B) arranged on one spoiler body surface, which spoiler body surface is disposed toward a rotor blade surface (40).

7. A spoiler according to any of the preceding claims, manufactured using any of the techniques of extrusion, casting, injection moulding.

8. A rotor blade (4) for a wind turbine (5), comprising a spoiler (1) according to any of claims 1 to 7 mounted onto a surface (40, 42) of the rotor blade (4).

9. A rotor blade according to claim 8, comprising an adhesive layer (2) between a mounting band (11A, 11B, 12A, 12B, 12C, 12D) and the rotor blade surface (40, 42) for an adhesive connection to the rotor blade surface (40, 42).

10. A rotor blade according to claim 8 or claim 9, comprising a recess (6) in a rotor blade surface (40), which recess (6) is realised to at least partially accommodate a mounting band (11A, 12C).

11. A rotor blade according to claim 10, wherein a mounting band (11A, 12C) is contained in the recess (6) such that an outer surface of the mounting band (11A, 12C) is flush with the rotor blade surface (40).

12. A wind turbine (5) comprising a number of rotor blades (4) attached to a hub (7), wherein at least one rotor blade (4) comprises a spoiler (1) according to any of claims 1 to 7 mounted onto a surface (40, 42) of the rotor blade (4).

## Patentansprüche

1. Spoiler (1) für ein Rotorblatt (4) einer Windenergieanlage (5), der Folgendes umfasst:
- einen Spoilerkörper (10A, 10B, 10C, 10D, 10E) und
- ein erstes Montageband (11A, 11B), das an einer ersten Längskante (13A) des Spoilerkörpers (10A, 10B, 10C, 10D, 10E) entlang angeordnet ist, und ein zweites Montageband (12A, 12B, 12C, 12D), das an einer zweiten Längskante (13B) des Spoilerkörpers (10A, 10B, 10C, 10D, 10E) entlang angeordnet ist, zum Montieren des Spoilers (1) an einer Fläche (40, 42) des Rotorblatts (4), wobei ein Montageband (11A, 11B, 12A, 12B, 12C, 12D) eine abgewinkelte Verlängerung des Rotorblatts (10A, 10C, 10D, 10E) umfasst, wobei das Montageband (11A, 11B, 12A, 12B, 12C, 12D) so ausgelegt ist, dass es sich an eine Krümmung der Rotorblattfläche (40, 42) anpasst,
wobei der Spoilerkörper (1) und das Montageband (11A, 11B, 12A, 12B, 12C, 12D) als Einheit ausgebildet sind
und wobei ein Montageband (11A, 11B, 12A, 12B, 12C, 12D) zum Montieren an einer Hinterkante (42) des Rotorblatts (4) angeordnet ist.

2. Spoiler nach Anspruch 1, wobei ein Montageband (11A, 11B, 12A, 12B, 12C, 12D) zum Montieren auf einer Druckseite (40) des Rotorblatts (4) angeordnet ist.

3. Spoiler nach einem der vorhergehenden Ansprüche, wobei der Spoilerkörper (10C) ein aerodynamisches Element und ein Verstärkungselement umfasst, das so angeordnet ist, dass es von dem aerodynamischen Element aus nach außen ragt.

4. Spoiler nach Anspruch 3, das ein mit dem aerodynamischen Element verbundenes erstes Montageband (11A) und ein mit dem Verstärkungselement verbundenes zweites Montageband (12C) umfasst.

5. Spoiler nach einem der vorhergehenden Ansprüche, wobei der Spoiler (1) einen geschlossenen Spoilerkörper (10B) umfasst.

6. Spoiler nach Anspruch 5, der ein erstes Montageband (11B) und ein zweites Montageband (12B) umfasst, die an einer Spoilerkörperfläche angeordnet sind, welche zu einer Rotorblattfläche (40) hin angeordnet ist.

7. Spoiler nach einem der vorhergehenden Ansprüche, der unter Verwendung einer der Techniken des Extrudierens, Gießens, Spritzgießens hergestellt ist.

8. Rotorblatt (4) für eine Windenergieanlage (5), das einen Spoiler (1) nach einem der Ansprüche 1 bis 7 umfasst, der an eine Fläche (40, 42) des Rotorblatts (4) montiert ist.

9. Rotorblatt nach Anspruch 8, das zwischen einem Montageband (11A, 11B, 12A, 12B, 12C, 12D) und der Rotorblattfläche (40, 42) eine Klebeschicht (2) für eine Klebeverbindung mit der Rotorblattfläche (40, 42) umfasst.

10. Rotorblatt nach Anspruch 8 oder 9, das eine Vertiefung (6) in einer Rotorblattfläche (40) umfasst, wobei die Vertiefung (6) so ausgelegt ist, dass sie zumindest teilweise ein Montageband (11A, 12C) aufnimmt.

11. Rotorblatt nach Anspruch 10, wobei ein Montageband (11A, 12C) so in der Vertiefung (6) aufgenommen ist, dass eine Außenfläche des Montagebands (11A, 12C) bündig mit der Rotorblattfläche (40) abschließt.

12. Windenergieanlage (5) mit einer Anzahl Rotorblätter (4), die an einer Nabe (7) angebracht sind, wobei mindestens ein Rotorblatt (4) einen Spoiler (1) nach einem der Ansprüche 1 bis 7 umfasst, der an einer Fläche (40, 42) des Rotorblatts (4) befestigt ist.

## Revendications

1. Déflecteur (1) pour pale de rotor (4) d'une éolienne (5), lequel déflecteur (1) comprend
- un corps de déflecteur (10A, 10B, 10C, 10D, 10E) et
- une première bande de montage (11A, 11B) agencée le long d'une première arête longitudinale (13A) du corps de déflecteur (10A, 10B, 10C, 10D, 10E) et une seconde bande de montage (12A, 12B, 12C, 12D) agencée le long d'une seconde arête longitudinale (13B) du corps de déflecteur (10A, 10B, 10C, 10D, 10E) pour monter le déflecteur (1) sur une surface (40, 42) de la pale de rotor (4), une bande de montage (11A, 11B, 12A, 12B, 12C, 12D) comprenant une extension angulaire du corps de déflecteur (10A, 10C, 10D, 10E), laquelle bande de montage (11A, 11B, 12A, 12B, 12C, 12D) est conçue pour s'adapter à une courbure de la surface (40, 42) de la pale de rotor ; le corps de déflecteur (1) et la bande de montage (11A, 11B, 12A, 12B, 12C, 12D) étant formés comme une entité unique ; et une bande de montage (11A, 11B, 12A, 12B, 12C, 12D) étant conçue pour un montage sur une arête arrière (42) de la pale de rotor (4).

2. Déflecteur selon la revendication 1, une bande de montage (11A, 11B, 12A, 12B, 12C, 12D) étant conçue pour un montage sur un côté de pression (40) de la pale de rotor (4).

3. Déflecteur selon l'une quelconque des revendications précédentes, le corps de déflecteur (10C) comprenant un élément aérodynamique et un élément de renforcement conçu pour faire saillie vers l'extérieur de l'élément aérodynamique.

4. Déflecteur selon la revendication 3, comprenant une première bande de montage (11A) connectée à l'élément aérodynamique et une seconde bande de montage (12C) connectée à l'élément de renforcement.

5. Déflecteur selon l'une quelconque des revendications précédentes, le déflecteur (1) comprenant un corps de déflecteur fermé (10B).

6. Déflecteur selon la revendication 5, comprenant une première bande de montage (11B) et une seconde bande de montage (12B) agencées sur une surface de corps de déflecteur, laquelle surface de corps de déflecteur est disposée vers une surface (40) de pale de rotor.

7. Déflecteur selon l'une quelconque des revendications précédentes, fabriqué en utilisant l'une quelconque des techniques d'extrusion, de coulée, de moulage par injection.

8. Pale de rotor (4) pour éolienne (5), comprenant un déflecteur (1) selon l'une quelconque des revendications 1 à 7 monté sur une surface (40, 42) de la pale de rotor (4).

9. Pale de rotor selon la revendication 8, comprenant une couche adhésive (2) entre une bande de montage (11A, 11B, 12A, 12B, 12C, 12D) et la surface (40, 42) de la pale de rotor pour une connexion adhésive sur la surface (40, 42) de la pale de rotor.

10. Pale de rotor selon la revendication 8 ou la revendication 9, comprenant un creux (6) dans une surface (40) de pale de rotor, lequel creux (6) est conçu pour recevoir, au moins partiellement, une bande de montage (11A, 12C).

11. Pale de rotor selon la revendication 10, une bande de montage (11A, 12C) étant contenue dans le creux (6) de façon qu'une surface extérieure de la bande de montage (11A, 12C) soit au même niveau que la surface (40) de la pale de rotor.

12. Éolienne (5) comprenant un nombre de pales de rotor (4) fixées sur un moyeu (7), au moins une pale de rotor (4) comprenant un déflecteur (1) selon l'une quelconque des revendications 1 à 7 monté sur une surface (40, 42) de la pale de rotor (4).
